# EUROPÄISCHE PATENTSCHRIFT

(11) **EP 2 212 595 B1**
(45) Veröffentlichungstag und Bekanntmachung des Hinweises auf die Patenterteilung: **28.12.2011**
(21) Anmeldenummer: 08842935.2
(22) Anmeldetag: 21.10.2008
(51) Int. Cl.: F16K 1/226

(54) **VENTIL**
VALVE
SOUPAPE

(30) Priorität: 24.10.2007 DE 102007050899
(43) Veröffentlichungstag der Anmeldung: 04.08.2010
(73) Patentinhaber: Continental Automotive GmbH, 30165 Hannover (DE)
(72) Erfinder: BORNMANN, Gerd, 65239 Hochheim (DE); CLEMEN, Uwe, 63477 Maintal (DE); HÄUSER, Marcus, 35398 Giessen (DE)
(86) Internationale Anmeldenummer: PCT/EP2008/064219
(87) Internationale Veröffentlichungsnummer: WO 2009/053363

(56) Entgegenhaltungen:
- EP-A- 0 023 953
- DE-A1-102005 051 305
- US-A- 4 294 428

## Beschreibung

Die Erfindung bezieht sich auf ein Ventil sowie auf eine Verwendung des Ventils. Ventile, beispielsweise für Gaskanäle, sind bekannt. In der DE 10 2005 051 305 A1 wird ein Ventil beschrieben, das aus einem Gehäuse mit einem ersten Ventilsitz für eine erste Klappe und einem zweiten Ventilsitz für eine zweite Klappe, die an einer Antriebswelle drehbar gelagert sind, besteht. Die Antriebswelle des Ventils wird zwischen der ersten Klappe und der zweiten Klappe durch ein Teil des Gehäuses geführt. Bei solchen Ventilen ist nachteilig, dass Verschmutzungen oder Kondensattropfen im strömenden Medium in die Lager oder Dichtungen der Antriebswelle gelangen können und diese in nachteiliger Weise schädigen.

Der Erfindung liegt daher die Aufgabe zugrunde, ein Ventil zu schaffen, bei dem ein Eintrag von Verschmutzungen oder Kondensat in die Lager und Dichtungen der Antriebswelle weitgehend vermieden werden können. Der Erfindung liegt ferner die Aufgabe zugrunde, eine spezielle Verwendung des Ventils zu schaffen.

Die der Erfindung zugrunde liegende Aufgabe wird durch ein Ventil gelöst, das aus einem Gehäuse mit mindestens einem Ventilsitz für mindestens eine Klappe besteht, die an einer Antriebswelle drehbar gelagert ist, bei dem die Antriebswelle an mindestens einer Seite durch das Gehäuse geführt wird, wobei in diesem Bereich eine Hülse innen im Gehäuse ortsfest angeordnet ist, durch welche die Antriebswelle drehbar geführt wird und die einen ersten Bereich aufweist, der der Klappe zugewandt ist und der die Antriebswelle mit einem ersten geringen Spiel umfasst und die einen zweiten Bereich aufweist, der der Klappe abgewandt ist und der im Vergleich zum ersten Bereich eine Durchmessererweiterung aufweist und der an seiner der Klappe abgewandten Stirnseite die Antriebswelle mit einem zweiten geringen Spiel umfasst. Unter der mindestens einen Seite der Antriebswelle beispielsweise der Bereich eines Endes der Antriebswelle zu verstehen. Die Hülse ist starr ausgeführt und besteht beispielsweise aus Edelstahl oder Kunststoff. Sie ist im Gehäuse ortsfest angeordnet, was beispielsweise durch Verkleben oder durch eine Rastverbindung erfolgen kann. Sowohl der erste Bereich als auch der zweite Bereich der Hülse bilden eine Einheit und sind in der Regel als Einzelteil gefertigt. Das erste geringe Spiel kann beispielsweise in der gleichen Weise ausgeführt sein wie das zweite geringe Spiel. Diese sind in der Regel ingenieurmäßig auszulegen, wobei sicherzustellen ist, dass die Hülse möglichst eng an der Antriebswelle anliegt, die jedoch in der Hülse immer noch einer Drehbewegung unterworfen werden kann. Die Durchmessererweiterung ist ingenieurmäßig möglichst groß zu wählen. Durch die Durchmessererweiterung wird eine Art Speicherraum für Schmutz und gegebenenfalls Kondensat geschaffen, die dann nicht mehr zu den Lagern für die Antriebswelle gelangen können. Es hat sich in überraschender Weise gezeigt, dass sich mit dem Ventil ein Eintrag von Schmutz oder Kondensat in die Dichtungen und in die Lager der Antriebswelle nahezu vollständig vermeiden lassen. Zum einen wird durch den ersten Bereich der Hülse ein Eintrag von Schmutz oder Kondensat in Richtung auf die Lager und Dichtungen der Antriebswelle erschwert. Die dann nur noch minimal eingetragenen Mengen an Schmutz oder Kondensat werden dann im zweiten Bereich der Hülse, der durch die Durchmessererweiterung eine Art Speicherraum bildet, aufgefangen, so dass eine Weiterleitung von Schmutz oder Kondensat in Richtung der Dichtungen oder Lager nahezu vollständig verhindert wird. Die Anordnung der jeweiligen Hülse erfordert keinen zusätzlichen Bauraum für das Ventil, was ebenfalls vorteilhaft ist. Auf diese Weise wird die Lebensdauer des Ventils in vorteilhafter Weise erhöht.

Eine bevorzugte Ausgestaltung der Erfindung besteht darin, dass neben der Stirnseite der Hülse von der Klappe abgewandt eine Ringdichtung oder ein Lager um die Antriebswelle angeordnet sind. Die Anordnung der Hülse in unmittelbarer Nachbarschaft eines Lagers oder einer Ringdichtung ermöglicht eine optimale Bauraumminimierung für das Ventil.

Gemäß einer weiteren bevorzugten Ausgestaltung der Erfindung ist vorgesehen, dass die Länge des ersten Bereiches doppelt so lang ausgeführt ist wie die Länge des zweiten Bereiches. Auf diese Weise wird sichergestellt, dass nahezu keinerlei Mengen von Schmutz oder Kondensat in den zweiten Bereich der Hülse gelangen können.

Eine weitere bevorzugte Ausgestaltung der Erfindung sieht vor, dass die Durchmessererweiterung des zweiten Bereiches zum ersten Bereich der Hülse auf den Außendurchmesser bezogen im Bereich des 1,2- bis 1,8-fachen liegt. Diese Dimensionierung ermöglicht zum einen eine optimale Ausbildung des Speicherraumes durch die Durchmessererweiterung. Zum anderen wird der erforderliche Bauraum für die Hülse bezogen auf ihre Funktionalität minimiert und gleichzeitig sichergestellt, dass bereits vorhandene Ventile in der Regel entsprechend problemlos nachgerüstet werden können.

Gemäß einer weiteren bevorzugten Ausgestaltung der Erfindung ist die Hülse mit seinem ersten Bereich innen im Gehäuse ortsfest eingeklemmt angeordnet. Das Einklemmen erfolgt dabei beispielsweise durch Einpressen der Hülse in das Gehäuse. Dabei ist vorteilhaft, dass auf zusätzliche Befestigungsmittel, wie beispielsweise Klebstoff, verzichtet werden kann.

Nach einer weiteren bevorzugten Ausgestaltung der Erfindung wird die Antriebswelle an zwei Seiten durch das Gehäuse geführt und an jeder Seite durch eine jeweils angeordnet Hülse drehbar geführt, die jeweils innen im Gehäuse ortsfest angeordnet sind. Auf diese Weise wird eine optimale drehbare Lagerung der Antriebswelle erreicht, wobei gleichzeitig die Dichtungen oder Lager der Antriebswelle im Betrieb nicht durch Schmutz oder Kondensat Schädigungen erfahren.

Gemäß einer weiteren bevorzugten Ausgestaltung der Erfindung ist vorgesehen, dass mindestens eine Hülse mit ihrem ersten Bereich in den Bereich der Klappe hineinragt. Dadurch wird die Positionierung der Hülse verbessert und erleichtert. Gleichzeitig wird zusätzlich der Eintrag von Schmutz oder Kondensat in das Innere der Hülse erschwert.

Gegenstand der Erfindung ist schließlich die Verwendung des Ventils als Gasrückführventil eines Kraftfahrzeuges. Gase, die durch ein Gasrückführventil eines Kraftfahrzeuges geleitet werden, weisen in der Regel Schmutzpartikeln und Kondensate auf, die nach relativ kurzen Betriebszeiten die Dichtungen oder Lager der Antriebswelle beschädigen können. Eine Verwendung des erfindungsgemäßen Ventils als Gasrückführventil eines Kraftfahrzeuges ist daher besonders vorteilhaft.

Die Erfindung wird nachfolgend anhand der Zeichnung (Fig. 1 bis Fig. 3) näher und beispielhaft erläutert.
- Fig. 1: zeigt das Ventil im Längsschnitt.
- Fig. 2: zeigt die Hülse im Längsschnitt.
- Fig. 3: zeigt die Hülse in dreidimensionaler Form.

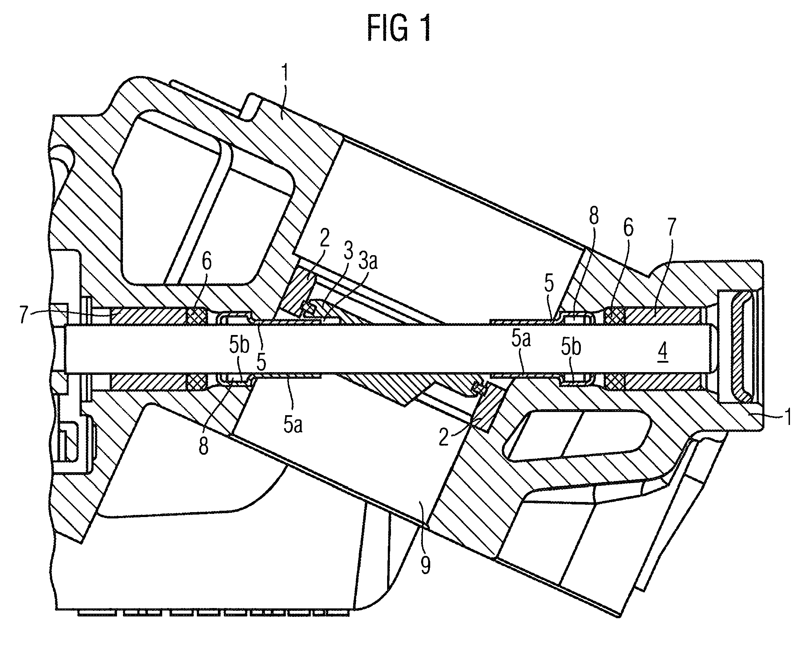

In Fig. 1 ist das Ventil im Längsschnitt dargestellt. Es besteht aus einem Gehäuse 1 mit einem Ventilsitz 2 für eine Klappe 3, die an einer Antriebswelle 4 drehbar gelagert ist. Die Antriebswelle 4 ist an beiden Seiten durch das Gehäuse 1 geführt. Jeweils in diesem Bereich ist eine Hülse 5 innen im Gehäuse 1 ortsfest angeordnet, durch welche die Antriebswelle 4 drehbar geführt wird. Die Hülse 5 weist einen ersten Bereich 5a auf, der der Klappe 3 zugewandt ist und der die Antriebswelle 4 mit einem ersten geringen Spiel umfasst. Die Hülse 5 weist ferner einen zweiten Bereich 5b auf, der der Klappe 3 abgewandt ist und der im Vergleich zum ersten Bereich 5a eine Durchmessererweiterung aufweist und der an seiner der Klappe 3 abgewandten Stirnseite die Antriebswelle 4 mit einem zweiten geringen Spiel umfasst. Durch die Durchmessererweiterung wird ein Speicherraum 8 gebildet, der zum Auffangen von Schmutz oder Kondensat geeignet ist. Neben der Stirnseite der jeweiligen Hülse 5 sind von der Klappe 3 abgewandt eine Ringdichtung 6 und ein Lager 7 um die Antriebswelle 4 angeordnet. Zu diesen gelangen nahezu keinerlei Mengen von Schmutz oder Kondensat, was durch die Anordnung der Hülse 5 erreicht wird. Die im Strömungskanal 9 somit im strömenden Medium vorhandenen Schmutzpartikeln oder Kondensattröpfchen werden somit in vorteilhafter Weise durch die Anordnung der jeweiligen Hülse 5 an einer Wanderung hin zu den Dichtungen 6 oder Lagern 7 der Antriebswelle 4 gehindert. Dabei ist besonders vorteilhaft, wenn die Hülsen 5 mit ihrem jeweiligen ersten Bereich 5a innen im Gehäuse 1 ortsfest eingeklemmt angeordnet sind. Bei dem in Fig. 1 dargestellten Ventil ist die Antriebswelle 4 an zwei Seiten durch das Gehäuse 1 geführt und an jeder Seite durch eine jeweils angeordnete Hülse drehbar gelagert, wobei eine Hülse 5 mit ihrem ersten Bereich 5a in den Bereich 3a der Klappe 3 hineinragt. Das gezeigte Ventil eignet sich in hervorragender Weise als Gasrückführventil für ein Kraftfahrzeug.

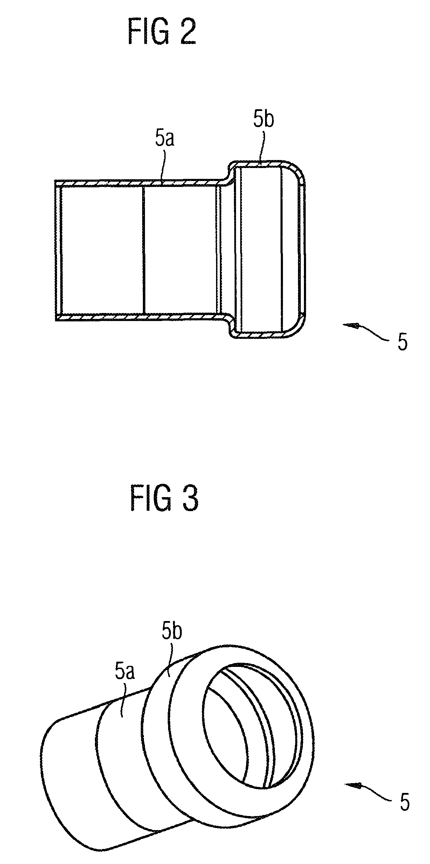

In Fig. 2 ist die Hülse 5 im Längsschnitt dargestellt. Die Hülse 5 weist einen ersten Bereich 5a und einen zweiten Bereich 5b auf. Der zweite Bereich 5b weist im Vergleich zum ersten Bereich 5a eine Durchmessererweiterung auf.

In Fig. 3 ist die Hülse 5 gemäß Fig. 2 dreidimensional dargestellt. In der Regel lässt sie sich relativ unkompliziert in bereits bestehende Ventile nachrüsten.

## Patentansprüche

1. Ventil, das aus einem Gehäuse (1) mit mindestens einem Ventilsitz (2) für mindestens eine Klappe (3) besteht, die an einer Antriebswelle (4) drehbar gelagert ist, bei dem die Antriebswelle (4) an mindestens einer Seite durch das Gehäuse (1) geführt wird, wobei in diesem Bereich eine Hülse (5) innen im Gehäuse (1) ortsfest angeordnet ist, durch welche die Antriebswelle (4) drehbar geführt wird und die einen ersten Bereich (5a) aufweist, der der Klappe (3) zugewandt ist und der die Antriebswelle (4) mit einem ersten geringen Spiel umfasst, **dadurch gekennzeichnet, daß** die Hülse einen zweiten Bereich (5b) aufweist, der der Klappe (3) abgewandt ist und der im Vergleich zum ersten Bereich (5a) eine Durchmessererweiterung aufweist und der an seiner der Klappe (3) abgewandten Stirnseite die Antriebswelle (4) mit einem zweiten geringen Spiel umfasst.

2. Ventil nach Anspruch 1, bei dem neben der Stirnseite der Hülse (5) von der Klappe (3) abgewandt eine Ringdichtung (6) oder ein Lager (7) um die Antriebswelle (4) angeordnet sind.

3. Ventil nach Anspruch 1 oder Anspruch 2, bei dem die Länge des ersten Bereiches (5a) doppelt so lang ausgeführt ist wie die Länge des zweiten Bereiches (5b).

4. Ventil nach einem der Ansprüche 1 bis 3, bei dem die Durchmessererweiterung des zweiten Bereiches (5b) zum ersten Bereich (5a) der Hülse (5) auf den Außendurchmesser bezogen im Bereich des 1,2- bis 1,8-fachen liegt.

5. Ventil nach einem der Ansprüche 1 bis 4, bei der die Hülse (5) mit seinem ersten Bereich (5a) innen im Gehäuse (1) ortsfest eingeklemmt angeordnet ist.

6. Ventil nach einem der Ansprüche 1 bis 5, bei dem die Antriebswelle (4) an zwei Seiten durch das Gehäuse (1) geführt wird und an jeder Seite durch eine jeweils angeordnete Hülse (5) drehbar geführt wird, die jeweils innen im Gehäuse (1) ortsfest angeordnet sind.

7. Ventil nach einem der Ansprüche 1 bis 6, bei der mindestens eine Hülse (5) mit ihrem ersten Bereich (5a) in den Bereich (3a) der Klappe (3) hineinragt.

8. Verwendung des Ventils nach einem der Ansprüche 1 bis 7 als Gasrückführventil eines Kraftfahrzeuges.

## Claims

1. Valve which comprises a housing (1) having at least one valve seat (2) for at least one flap (3), which flap is rotatably mounted on a drive shaft (4), wherein the drive shaft (4) is guided on at least one side through the housing (1), and in this region a sleeve (5) through which the drive shaft (4) is rotatably guided is arranged fixed in place inside the housing (1), which sleeve has a first region (5a) which faces the flap (3) and which encloses the drive shaft (4) with a first slight play, **characterized in that** the sleeve has a second region (5b) which faces away from the flap (3) and which has a widening in diameter by comparison with the first region (5a) and which, on its end face facing away from the flap (3), encloses the drive shaft (4) with a second slight play.

2. Valve according to Claim 1, wherein a ring seal (6) or a bearing (7) is arranged around the drive shaft (4) next to the end face of the sleeve (5) and facing away from the flap (3).

3. Valve according to Claim 1 or Claim 2, wherein the length of the first region (5a) is designed to be twice as long as the length of the second region (5b).

4. Valve according to one of Claims 1 to 3, wherein the widening in diameter of the second region (5b) with respect to the first region (5a) of the sleeve (5) based on the outside diameter lies in the range of 1.2 to 1.8 times wider.

5. Valve according to one of Claims 1 to 4, wherein the sleeve (5) is arranged clamped fixedly in place inside the housing (1) by its first region (5a).

6. Valve according to one of Claims 1 to 5, wherein the drive shaft (4) is guided on two sides through the housing (1) and is guided rotatably on each side through a respectively arranged sleeve (5), which sleeves are in each case arranged fixedly in place inside the housing (1).

7. Valve according to one of Claims 1 to 6, wherein at least one sleeve (5) projects by its first region (5a) into the region (3a) of the flap (3).

8. Use of the valve according to one of Claims 1 to 7 as a gas recirculation valve of a motor vehicle.

## Revendications

1. Soupape, qui est constituée d'un corps (1) ayant au moins un siège (2) de soupape pour au moins un volet (3), lequel est monté tournant sur un arbre (4) d'entraînement, dans laquelle l'arbre (4) d'entraînement est guidé au moins d'un côté par le corps (1), dans laquelle dans cette zone un manchon (5) est monté à poste fixe dans le corps (1) à l'intérieur, manchon par lequel l'arbre (4) d'entraînement est guidé de manière à pouvoir tourner et qui a une première zone (5a), qui est tournée vers le volet (3) et qui entoure l'arbre (4) d'entraînement avec un premier jeu petit, **caractérisée en ce que** le manchon a une deuxième zone (5b), qui est éloignée du volet (3) et qui a un agrandissement de diamètre par rapport à la première zone (5a) et qui, de son côté frontal éloigné du volet (3), entoure l'arbre (4) d'entraînement avec un deuxième jeu petit.

2. Soupape suivant la revendication 1, dans laquelle, à côté du côté frontal du manchon (5) éloigné du volet (3), un joint (6) torique ou un palier (7) sont montés autour de l'arbre (4) d'entraînement.

3. Soupape suivant la revendication 1 ou la revendication 2, dans laquelle la longueur de la première zone (5a) est deux fois plus grande que la longueur de la deuxième zone (5b).

4. Soupape suivant l'une des revendications 1 à 3, dans laquelle l'agrandissement du diamètre de la deuxième zone (5b) par rapport à celui de la première zone (5a) du manchon(5) est, rapporté au diamètre extérieur, compris entre 1,2 et 1,8 fois.

5. Soupape suivant l'une des revendications 1 à 4, dans laquelle le manchon (5) est monté serré de manière fixe par sa première zone (5a) à l'intérieur du corps (1).

6. Soupape suivant l'une des revendications 1 à 5, dans laquelle l'arbre (4) d'entraînement est guidé de deux côtés par le corps (1) et est guidé de manière à pouvoir tourner de chaque côté par un manchon (5) respectif, lesquels sont montés de manière fixe respectivement à l'intérieur du corps (1).

7. Soupape suivant l'une des revendications 1 à 6, dans laquelle au moins un manchon (5) pénètre par sa première zone (5a) dans la zone (3a) du volet (3).

8. Utilisation de la soupape suivant l'une des revendications 1 à 7 comme soupape de recyclage des gaz d'un véhicule automobile.
